# EUROPEAN PATENT APPLICATION

(11) **EP 2 725 425 A2**
(43) Date of publication of application: **30.04.2014**
(21) Application number: 13169082.8
(22) Date of filing: 24.05.2013
(51) Int. Cl.: G03G 15/00

(54) **Image forming apparatus to process print job data in deep sleep mode and method thereof**

(30) Priority: 29.10.2012 KR 20120120618
(71) Applicant: Samsung Electronics Co., Ltd, Gyeonggi-do 443-742 (KR)
(72) Inventor: Yang, Seung-hae, Suwon-si (KR); Lee, Gun-il, Yongin-si (KR)
(74) Representative: Waddington, Richard

(57) **Abstract**

A method of processing print job data received in a deep sleep mode by an image forming apparatus which performs a print job based on authentication includes: detecting a wakeup event at at least one external input port included in the image forming apparatus, parsing print job data while maintaining the deep sleep mode if the wakeup event is reception of the print job data, checking whether an authentication field value for performing authentication exists in the parsed print job data, and ignoring the wakeup event and keeping the deep sleep mode if the authentication field value does not exist based on the checking.

## Description

### CROSS-REFERENCE TO RELATED APPLICATIONS

This application claims priority from Korean Patent Application No. 10-2012-0120618, filed on October 29, 2012, in the Korean Intellectual Property Office, the disclosure of which is incorporated herein in its entirety by reference.

### BACKGROUND OF THE INVENTION

### 1. Field of the Invention

The present general inventive concept relates to an image forming apparatus to process print job data received in a deep sleep mode and a method thereof.

### 2. Description of the Related Art

An image forming apparatus has a deep sleep mode to reduce standby power consumption from a sleep mode. When print job data is received during an operation in the deep sleep mode, the deep sleep mode ends, and a sleep mode or a normal mode starts. However, even though an image forming apparatus for performing a print job based on user authentication receives print job data, the print job is not performed if the user authentication fails, and such a user authentication process is performed in the normal mode. That is, the image forming apparatus operating in the deep sleep mode enters into the normal mode even for print job data transmitted by an unauthorized user because the image forming apparatus operating in the deep sleep mode cannot know whether the print job data is transmitted by an authorized user. In this case, the image forming apparatus consumes power unnecessarily without performing any job after entering into the normal mode.

### SUMMARY OF THE INVENTION

The present general inventive concept provides an image forming apparatus to efficiently operate a deep sleep mode and to reduce power consumption by selectively ending the deep sleep mode according to a verification result of print job data when the image forming apparatus processes the print job data received in the deep sleep mode, and a method thereof.

Additional features and utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

The foregoing and/or other features and utilities of the present general inventive concept may be achieved by providing a method of processing print job data received in a deep sleep mode by an image forming apparatus which performs a print job based on authentication, the method including detecting a wakeup event at at least one external input port included in the image forming apparatus, parsing print job data while maintaining the deep sleep mode if the wakeup event is reception of the print job data, checking whether an authentication field value to perform authentication exists in the parsed print job data, and ignoring the wakeup event and keeping the deep sleep mode if the authentication field value does not exist based on the checking.

The foregoing and/or other features and utilities of the present general inventive concept may also be achieved by providing a computer-readable recording medium recording therein a program to execute the method describe above or hereinafter.

The foregoing and/or other features and utilities of the present general inventive concept may also be achieved by providing an image forming apparatus having operational modes including a normal mode, a general sleep mode, and a deep sleep mode, the image forming apparatus including a cache memory including a microkernel to control an operation of the image forming apparatus in the deep sleep mode, and a controller to execute the microkernel located in the cache memory to process a wakeup event received while in the deep sleep mode, wherein when print job data is received as the wakeup event, the controller checks whether an authentication field value to perform authentication exists in the print job data while maintaining the deep sleep mode, and when the authentication field value does not exist, the controller ignores the wakeup event and keeps the deep sleep mode.

The foregoing and/or other features and utilities of the present general inventive concept may also be achieved by providing an image forming apparatus having operational modes including a normal mode to perform an image forming operation, a general sleep mode, and a deep sleep mode, the image forming apparatus including a controller configured to change the sleep mode to the deep sleep mode, to receive a wakeup event in the deep sleep mode, and to perform authentication in the deep sleep mode.

The image forming apparatus may further include a cache memory to include a microkernel when the sleep mode is changed to the deep sleep mode. The controller may execute the microkernel upon receiving the wakeup event to perform the authentication on the received wakeup event.

The image forming apparatus may further include a main memory to store data to be performed in the normal mode and the sleep mode, a cache memory to store first data to be performed in the normal mode and the sleep mode, and second data to be performed in the deep sleep mode. The controller may selectively control the main memory and cache memory in the normal mode and the sleep mode and may control the cache memory in the deep sleep mode.

The wakeup event may include a first wakeup event applied to the sleep mode and a second wakeup event applied to the deep sleep mode.

The controller may perform the authentication in the deep sleep mode according to the second wakeup event only.

The controller may not change the deep sleep mode to the normal mode when receiving the first wakeup event and the second wakeup event.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a block diagram illustrating an image forming apparatus according to an embodiment of the present general inventive concept;

FIG. 2 is a block diagram illustrating a normal mode, a general sleep mode, and a deep sleep mode from among operational modes of an image forming apparatus, according to an embodiment of the present general inventive concept;

FIG. 3 is a block diagram illustrating a microkernel according to an embodiment of the present general inventive concept;

FIG. 4 illustrates print job data according to an embodiment of the present general inventive concept;

FIG. 5 is a flowchart illustrating a method of processing print job data according to an embodiment of the present general inventive concept;

FIG. 6 is a flowchart illustrating a process of entering into a deep sleep mode according to an embodiment of the present general inventive concept; and

FIG. 7 is a flowchart illustrating an authentication process of print job data according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures. As used herein, the term "and/or" includes any and all combinations of one or more of the associated listed items. Expressions such as "at least one of," when preceding a list of elements, modify the entire list of elements and do not modify the individual elements of the list.

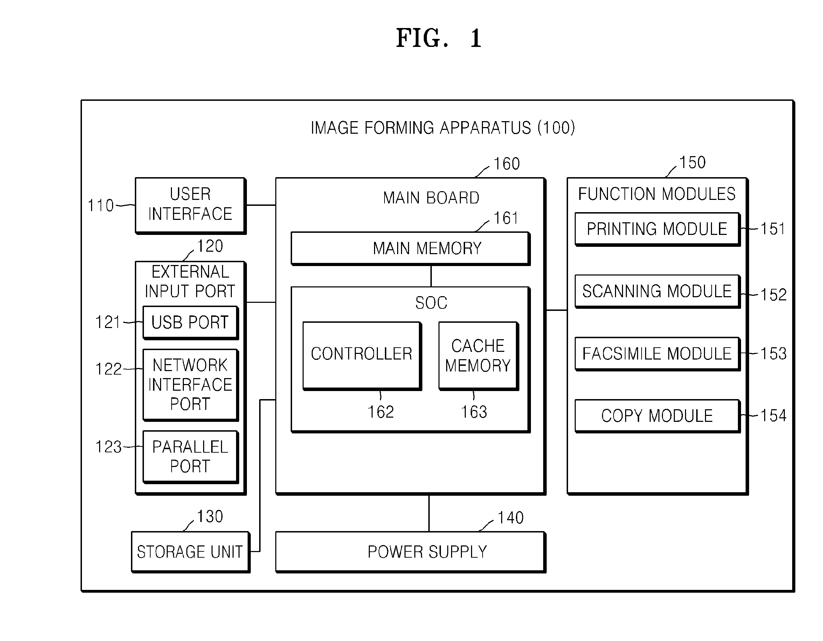

FIG. 1 is a block diagram illustrating an image forming apparatus 100 according to an embodiment of the present general inventive concept. The image forming apparatus 100 is a device to perform image forming operations (jobs), for example, generation, print, reception, transmission, and so forth of image data. The image forming apparatus may be a printer, a scanner, a copy machine, a facsimile machine, a multifunction printer (MFP) integrating and implementing functions of them, and so forth.

Referring to FIG. 1, the image forming apparatus 100 includes a user interface 110, an external input port 120, a storage unit 130, a power supply 140, one or more function modules 150, a main board 160, a main memory 161, a controller 162, and a cache memory 163.

The user interface 110 receives a manipulation input from a user and displays a manipulation result to the user. The user interface 110 may include a user input key (not illustrated) to receive the manipulation input from the user. The user input key may be implemented as physical buttons or on a touch screen (or panel). The user interface 110 may include a display unit (not illustrated) to display a manipulation result to the user. The display unit may be implemented as a touch screen including a function of the user input key.

The external input port 120 transmits and receives data to and from an external input device (not illustrated). The external input device may be a host computer, a mobile terminal, a mobile phone, a tablet computer apparatus, a digital camera, a portable disc, a USB memory unit, an SSD, a semiconductor memory unit, and so forth. The data received via the external input port 120 may be, for example, print job data, user authentication information, authentication information of the external input device, commands associated with maintenance and management of the image forming apparatus 100, basic settings of components of the image forming apparatus 100, and so forth.

The print job data is data of a job, such as copy, facsimile, scanning, or printing, of the image forming apparatus 100, which is described with a print job language (PJL). Thus, the print job data is not necessarily limited to data for printing an image on paper. When a function for user authentication or external input device authentication is set in the image forming apparatus 100, the image forming apparatus 100 may receive an identification (ID) and password for user authentication or a device ID for external input device authentication via the external input port 120. Such user authentication information and external input device authentication information may be described with the PJL and included in the print job data.

The external input port 120 may include at least one of, for example, a universal serial bus (USB) port 121, a network interface port 122, and a parallel port 123. When the external input port 120 includes the network interface port 122, the network interface port 122 may use a transmission control protocol (TCP) for data transmission over a network. The image forming apparatus 100 accesses a network via the network interface port 122, and an Internet protocol (IP) address is allocated to the image forming apparatus 100. In this case, the image forming apparatus 100 may perform functions of a network printer, an Internet facsimile machine, email transmission, web browsing, and so forth based on the IP address.

The USB port 121 and the network interface port 122 of the external input port 120 may support a wired connection and a wireless connection, respectively. For example, the external input port 120 may include a wireless USB (WUSB) port and/or a wireless local area network (WLAN) interface port. When a USB memory unit is connected to the USB port 121 using the wired connection, data can be transmitted between the USB memory and the USB port 121. When the network interface port 122 is connected to a network through the wireless connection, data can be transmitted between the network interface port 122 and an external apparatus of the network.

The storage unit 130 stores data received or generated by the image forming apparatus 100. When the image forming apparatus 100 includes a document box function to store one or more files per user, the storage unit 130 provides a storage space to store the files to the user. For example, a scanned image file, a raw file to be printed, a facsimile transmitting image file, print job data received through the external input port 120, and so forth may be stored in the storage unit 130.

The storage unit 130 may store user authentication information for user authentication. That is, the storage unit 130 may store IDs and passwords for the user authentication. In addition to the user authentication information, driver authentication information for authentication of a printer driver which has requested for printing, application authentication information for authentication of an application which has requested for printing, device authentication information for authentication of a device which has requested for printing, and so forth according to an authentication scheme of the image forming apparatus 100 may be stored in the storage unit 130.

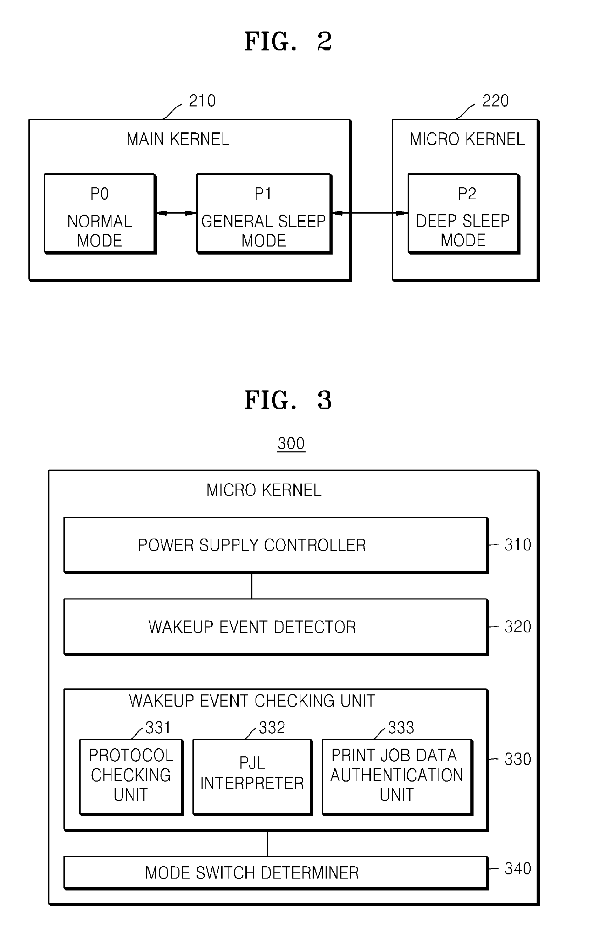

The storage unit 130 stores a program corresponding to a main kernel 210 (refer to FIG. 2) to control an operation of the image forming apparatus 100 in a normal mode P0 and a general sleep mode P1 and a program corresponding to a microkernel 220 (refer to FIG. 2) to control an operation of the image forming apparatus 100 in a deep sleep mode P2. In the normal mode P0 or the general sleep mode P1, the main kernel 210 stored in the storage unit 130 is located in the main memory 161 to control an operation of the image forming apparatus 100, and in the deep sleep mode P2, the microkernel 220 is located in the cache memory 163 to control an operation of the image forming apparatus 100. The normal mode P0, the general sleep mode P1, and the deep sleep mode P2 will be described below in detail with reference to FIG. 2.

The power supply 140 supplies power to one or more components of the image forming apparatus 100 under control of the controller 162. According to a determination or a setting of whether the image forming apparatus 100 operates in the normal mode P0, the general sleep mode P1, or the deep sleep mode P2, hardware resources to be supplied with the power of the power supply 140 may vary. For example, in the deep sleep mode P2, the power supply 140 may not supply power to the storage unit 130, the function modules 150, and the main memory 161 under control of the controller 162.

The one or more function modules 150 execute the printer function, the scanner function, the facsimile function, the copy function, and so forth included in the image forming apparatus 100. Thus, the function modules 150 may include a printing module 151, a scanning module 152, a facsimile module 153, and a copy module 154. Although FIG. 1 illustrates an MFP as the image forming apparatus 100, if the image forming apparatus 100 executes only one function, one or more of the function modules 150 may be omitted. For example, if the image forming apparatus 100 performs only the printer function, the scanning module 152, the facsimile module 153, and the copy module 154 may be omitted.

The main board 160 provides a circuit connect hardware resources of the image forming apparatus 100 to each other. On the main board 160, the main memory 161, the controller 162, and the cache memory 163 are mounted. The main memory 161 is a large-capacity memory to operate in the normal mode P0 or the general sleep mode P1, and as described above, the main kernel 210 is located in the main memory 161. In addition, the main memory 161 provides read and write spaces for data required for the image forming apparatus 100 to perform a predetermined job in the normal mode P0 or the general sleep mode P1. The main memory 161 may be implemented by a dynamic random access memory (DRAM). In the deep sleep mode P2, power is not supplied to the main memory 161, and thus, an operation of the main kernel 210 located in the main memory 161 stops as well.

The cache memory 163 stores a portion of data of the main memory 161 in the normal mode P0 or the general sleep mode P1 so that the controller 162 efficiently accesses the data stored in the main memory 161. The cache memory 163 may be implemented by a static random access memory (SRAM) having a read/write speed higher than the main memory 161. In the deep sleep mode P2, the cache memory 163 does not operate as a cache of the main memory 161, and the microkernel 220 is located in the cache memory 163. The microkernel 220 will be described below in detail with reference to FIG. 3.

The controller 162 controls an operation of the image forming apparatus 100 in the normal mode P0, the general sleep mode P1, and the deep sleep mode P2. The controller 162 controls an operation of the image forming apparatus 100 by executing the main kernel 210 located in the main memory 161 in the normal mode P0 or the general sleep mode P1. The controller 162 controls an operation of the image forming apparatus 100 by executing the microkernel 220 located in the cache memory 163 in the deep sleep mode P2.

The controller 162 controls the power supply 140 to supply power to the external input port 120, the cache memory 163, and the controller 162 even in the deep sleep mode P2. Since power is supplied to the external input port 120 even while in the deep sleep mode P2, the external input port 120 may receive a wakeup event. The controller 162 processes the wakeup event received in the deep sleep mode P2 by executing the microkernel 220 located in the cache memory 163. If the wakeup event received through the external input port 120 is reception of print job data, the controller 162 checks whether an authentication field value for performing authentication exists in the print job data while maintaining the deep sleep mode P2. If the authentication field value does not exist in the checking operation, the controller 162 ignores the wakeup event and keeps the deep sleep mode P2. When the controller 162 is set to operate in the deep sleep mode, the controller 162 does not change a mode for the deep sleep mode to the normal mode or the sleep mode during the authentication process preformed on data, a user, a driver, and/or an apparatus upon receipt of the wakeup event until the authentication required to change a mode. An operation of the controller 162 in the deep sleep mode P2 will be described below in detail with reference to FIG. 3.

FIG. 2 is a block diagram illustrating the normal mode P0, the general sleep mode P1, and the deep sleep mode P2 from among operational modes of the image forming apparatus 100 according to an embodiment of the present general inventive concept.

Referring to FIG. 2, the image forming apparatus 100 operates in one of the normal mode P0, the general sleep mode P1, and the deep sleep mode P2.

In the normal mode P0 or the general sleep mode P1, an operation of the image forming apparatus 100 is controlled by the main kernel 210. Once the main kernel 210 is booted, the main kernel 210 is located in the main memory 161 and controls an operation of the image forming apparatus 100. Hereinafter, a power control of the main kernel 210 in the normal mode P0 or the general sleep mode P1 is described.

In the normal mode P0, all hardware resources of the image forming apparatus 100 are initialized and/or ready to operate. For example, the display unit of the user interface 110 displays a screen to receive a manipulation input of a user, and the function modules 150 are also initialized and/or ready to operate while consuming standby power. The standby power indicates power always consumed regardless of performing a job in the image forming apparatus 100.

In the normal mode P0, when no job is performed for more than a preset predetermined time, and no manipulation of the user is input to the user interface 110, the image forming apparatus 100 enters into the general sleep mode P1. That is, the controller 162 of the image forming apparatus 100 performs a function of the general sleep mode P1, which is included in the main kernel 210.

In the general sleep mode P1, power is not supplied to at least a portion of hardware resources of the image forming apparatus 100. The hardware resources to which power is not supplied may vary according to a design or user preference. For example, power may not be supplied to the function modules 150. It is possible that in the user interface 110, the display screen does not display any screen. However, the user interface 110 may receive a manipulation of the user. In the general sleep mode P1, to activate the main kernel 210, power is supplied to the main memory 161. In addition, power is also continuously supplied to the main board 160. When a wakeup event is detected in the general sleep mode P1, the image forming apparatus 100 enters into the normal mode P0. Examples of the wakeup event are a case in which a manipulation of the user is input to the user interface 110, a case in which a motion of a paper cartridge (not illustrated), a scanner cover, a central cover, or the like is detected, and a case in which print job data is received through the external input port 120.

Since the main kernel 210 operates in the general sleep mode P1, an authentication process, such as the user authentication described above, may also be performed in the general sleep mode P1. For example, when an unauthorized user transmits print job data, the main kernel 210 performs the user authentication, and if the user authentication fails, the image forming apparatus 100 maintains the general sleep mode P1.

During the general sleep mode P1, if the wakeup event does not occur for more than a predetermined time, the image forming apparatus 100 enters into the deep sleep mode P2. To enter into the deep sleep mode P2, the main kernel 210 ends, and the microkernel 220 is booted. In other words, the microkernel 220 stored in the storage unit 130 is located in the cache memory 163. In the deep sleep mode P2, the power supplied to the main board 160 and the main memory 161 is cut off. However, power is still supplied to a region of the main board 160 in which the controller 162 and the cache memory 163 exist.

In the deep sleep mode P2, standby power may be minimized by slowing down an operational speed of the cache memory 163, i.e., a number of clocks or a frequency of a clock signal, and simultaneously cutting off a power supply to the storage unit 130. However, since a power supply to the external input port 120 is not cut off, the wakeup event may be received through the external input port 120. In the deep sleep mode P2, the controller 162 detects the wakeup event through the external input port 120 by executing the microkernel 220 located in the cache memory 163. The controller 162 may detect the wakeup event in a method of periodically polling the external input port 120. That is, the controller 162 may periodically query the external input port 120 about whether data has been received.

If authentication cannot be performed in the deep sleep mode P2 with respect to an unauthorized user, an unauthorized external device, or an unauthorized printer driver transmits print job data, the image forming apparatus 100 must change the deep sleep mode P2 to enter into the normal mode P0 or the general sleep mode P1 to perform the authentication. In this case, if print job data generated and transmitted by an unauthorized user, an unauthorized external device, or an unauthorized printer driver is detected or if the authentication fails, the image forming apparatus 100 discards the print job data and maintains the normal mode P0 or the general sleep mode P1 to wait another wakeup event for a predetermined time period.

Thus, when the deep sleep mode P2 can be efficiently usable for the authentication with respect to the print job data generated and transmitted by an unauthorized user, an unauthorized external device, or an unauthorized printer driver, the image forming apparatus 100 can reduce the power consumption.

According to the present general inventive concept, the controller 162 executing the microkernel 220 parses print job data and performs authentication while maintaining the deep sleep mode P2. If the print job data generated and transmitted by an unauthorized user, an unauthorized external device, or an unauthorized printer driver is detected, the controller 162 discards the print job data and keeps the deep sleep mode P2. Thus, according to the present general inventive concept, it may be prevented that the deep sleep mode P2 unnecessarily ends and is changed to the normal mode P0 or the general sleep mode P1, and the deep sleep mode P2 may be more efficiently usable, thereby reducing power consumption.

FIG. 3 is a block diagram illustrating a microkernel 300 according to an embodiment of the present general inventive concept.

Referring to FIG. 3, the microkernel 300 includes a power supply controller 310, a wakeup event detector 320, a wakeup event checking unit 330, and a mode switch determiner 340. It is possible that the microkernel 300 of FIG. 3 can be located in the cache memory 163. Since the controller 162 controls the cache memory 163, the controller 162 executes or performs the microkernel 300. Thus, an operation of the microkernel 300 in the description below may be considered as an operation actually performed by the controller 162.

The power supply controller 310 controls a supply of power to hardware resources of the image forming apparatus 100 in the deep sleep mode P2. The controller 162 of the image forming apparatus 100 executes the power supply controller 310 of the microkernel 300 to control the power supply 140 to cut off the supply of power to the hardware resources so that power is saved or reduced. The hardware resources to be power-saved may vary according to a design or user preference, and in the current embodiment, the hardware resources to be power-saved may be the main memory 161, the function modules 150, a region of the main board 160 in which the controller 162 and the cache memory 163 do not exist, and the display unit of the user interface 110. In addition, the power supply controller 310 sets an operational frequency, i.e., a number of clocks, of the controller 162 and the cache memory 163 to be lower than that in the normal mode P0 or the general sleep mode P1. However, the power supply controller 310 supplies power to the external input port 120, the controller 162, and the cache memory 163 even in the deep sleep mode P2.

The wakeup event detector 320 detects a wakeup event, that is, detects whether a wakeup event occurs or has occurred while the image forming apparatus 100 is in the deep sleep mode P2. The wakeup event detector 320 periodically checks the external input port 120 to detect whether print job data has been received from an external device (not illustrated). Besides the external input port 120, the wakeup event detector 320 periodically checks whether a manipulation of a user is input or has been input or whether a paper cartridge (not illustrated) or a cover is moved or has been withdrawn. If the wakeup event occurs, the wakeup event detector 320 informs the wakeup event checking unit 330 of the occurrence of the wakeup event.

The wakeup event checking unit 330 detects or checks a type of the wakeup event. The wakeup event checking unit 330 detects whether the wakeup event occurs or has occurred in the external input port 120. If it is detected that the wakeup event has not occurred in the external input port 120 but occurred due to a manipulation input of the user through the user interface 110 or withdrawal (uninstallation, detachment, or movement) of the paper cartridge or the cover, the wakeup event checking unit 330 requests the mode switch determiner 340 to end the deep sleep mode P2. However, if it is detected that the wakeup event occurs or has occurred in the external input port 120, the wakeup event checking unit 330 performs a checking operation to be described below with respect to the wakeup event.

If the detected wakeup event is data reception at the network interface port 122, a protocol checking unit 331 checks a transport protocol of the received data. If the protocol used for transmission of the data is the TCP, the protocol checking unit 331 transfers the data to a PJL interpreter 332. Otherwise, if other protocols, e.g., a user datagram protocol (UDP), are used for the transmission of the data, the protocol checking unit 331 discards the received data. When the data is discarded, the wakeup event is ignored, and the deep sleep mode P2 is still maintained.

The PJL interpreter 332 analyzes the data received through the external input port 120 based on the PJL. That is, the PJL interpreter 332 analyzes a PJL command in the data received through the external input port 120. If the data received through the external input port 120 is not print job data described with the PJL, the PJL interpreter 332 cannot analyze the data received through the external input port 120 based on the PJL and accordingly may determine that the data received through the external input port 120 is not print job data. Thus, when data other than print job data is received through the external input port 120, it may be determined by the PJL interpreter 332 that the received data is not print job data. Data which cannot be analyzed by the PJL interpreter 332 is discarded. When the data is discarded, a corresponding wakeup event is ignored, and the deep sleep mode P2 is still maintained.

If the data received through the external input port 120 is print job data, the PJL interpreter 332 parses the print job data. Although the PJL interpreter 332 may parse the entire print job data, it is possible that a specific region of the data is partially parsed. That is, the PJL interpreter 332 may perform partial parsing on a region used by a print job data authentication unit 333 for authentication.

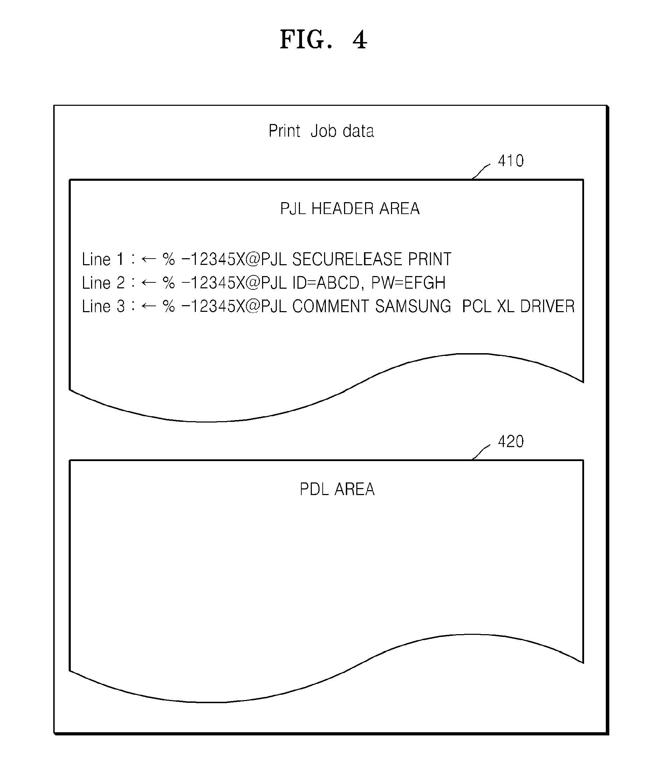

The print job data will now be described with reference to FIG. 4. First and second lines correspond to an authentication field for authentication of the print job data. In addition, the print job data may include a PJL header area 410 having information on descriptions of a print job, e.g., information, such as a name of the print job, the number of output copies, a double-sided/single-sided print mode, a page description language (PDL) type in a PDL area 420, and so forth. The PDL area 420 may include information on print pages described with page description languages, e.g., a print command language (PCL), a post script (PS), and so forth.

The first line in the authentication field existing in the PJL header area 410 corresponds to a field for authentication of a printer driver. For example, an authorized printer driver of a host computer inserts a string "SECURERELEASEPRINT" as a PJL command when print job data is generated. However, since an unauthorized printer driver does not insert the string "SECURERELEASEPRINT" into the PJL header area 410, the authentication of a printer driver may be performed by using the string "SECURERELEASEPRINT". The second line in the authentication field existing in the PJL header area 410 has user authentication information for user authentication. For example, the print job data shown in FIG. 4 may be considered as print job data transmitted by a user having a user account of which an ID is 'ABCD' and a password is 'EFGH'. Thus, the user authentication may be performed based on the second line of the PJL header area 410. Although driver authentication information and user authentication information are illustrated in the description of FIG. 4, other authentication information may be further included. For example, modifications may be made in a way of inserting or including a media access control (MAC) address or Internet protocol (IP) information as identification information of a host computer or inserting information for authentication of a specific application. In addition, a portion of the authentication field of FIG. 4 may be omitted. If only driver authentication is performed, the second line in the authentication field may be omitted. In another case, only user authentication may be performed by omitting the authentication field for the driver authentication. It is also possible that the authentication may be performed according to a combination of the above methods.

Referring back to FIG. 3, the PJL interpreter 332 may perform partial parsing on the first and second lines corresponding to the authentication field instead of parsing the entire print job data. A capacity of the cache memory 163 may limit the ability of the PJL interpreter 332 since the capacity of the cache memory 163 is generally much less than that of the main memory 161. Accordingly, the partial parsing is more efficient than the entire parsing in the PJL interpreter 332. When the PJL interpreter 332 performs partial parsing, the PJL interpreter 332 may include in advance information regarding a region or size to be parsed. The PJL interpreter 332 transfers the parsed print job data to the print job data authentication unit 333.

The print job data authentication unit 333 determines whether an authentication field value exists in the parsed print job data. To do this, the print job data authentication unit 333 may determine whether a predefined string exists in the analyzed PJL command. For user authentication information, the predefined string may include "ID=" and "PW=". In another method, the print job data authentication unit 333 may determine whether an authentication field value exists in the parsed print job data based on a size of the predefined string in the PJL command. For example, if the number of characters in a string obtained by analyzing the first line in the PJL header area 410 of FIG. 4 is different from the size of the predefined string, the print job data authentication unit 333 may determine that no authentication field value exists.

If it is determined that no authentication field value exists in the parsed print job data, the print job data authentication unit 333 informs the mode switch determiner 340 of a failure in authentication. In this case, the mode switch determiner 340 ignores the wakeup event and keeps the deep sleep mode P2.

Otherwise, if it is determined that an authentication field value exists in the parsed print job data, the print job data authentication unit 333 performs authentication of the print job data based on the authentication field value. The print job data authentication unit 333 includes information regarding an authentication key for performing the authentication of the print job data. In the normal mode P0, the information regarding the authentication key for performing the authentication of print job data is stored in the storage unit 130. When the image forming apparatus 100 enters into the deep sleep mode P2, the microkernel 300 including the authentication key is located in the cache memory 163. Thus, in the deep sleep mode P2, the authentication key is located in the cache memory 163. The authentication key is information for performing the authentication of print job data, which is described above, and may include, for example, user authentication information for user authentication or driver authentication information for printer driver authentication.

As described above, the wakeup event may include a first wakeup event to be applied to the deep sleep mode of the image forming apparatus 100, and a second wakeup event to be applied to the sleep mode of the image forming apparatus 100. The image forming apparatus 100 may change a mode from the deep sleep mode to the sleep mode or the normal mode according to the first wakeup event and the corresponding authentication. The image forming apparatus 100 may change a mode from the sleep mode to the normal mode according to the second wakeup event and the corresponding authentication. The first wakeup event may be included in the second wakeup event. However, a portion of the second wakeup event may not be included in the first wakeup event. The first wakeup event and the second wakeup event may be determined according to a design or user preference or an amount of power consumption or power saving or reduction.

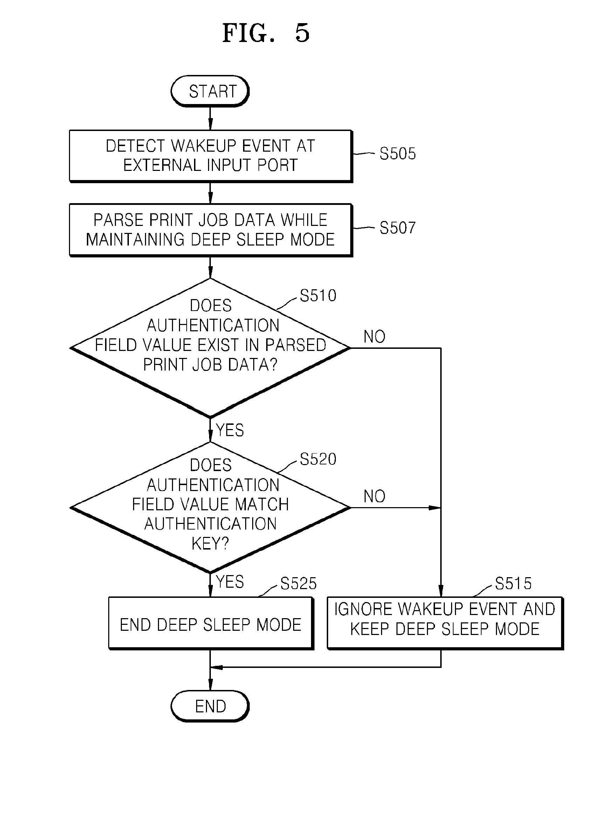

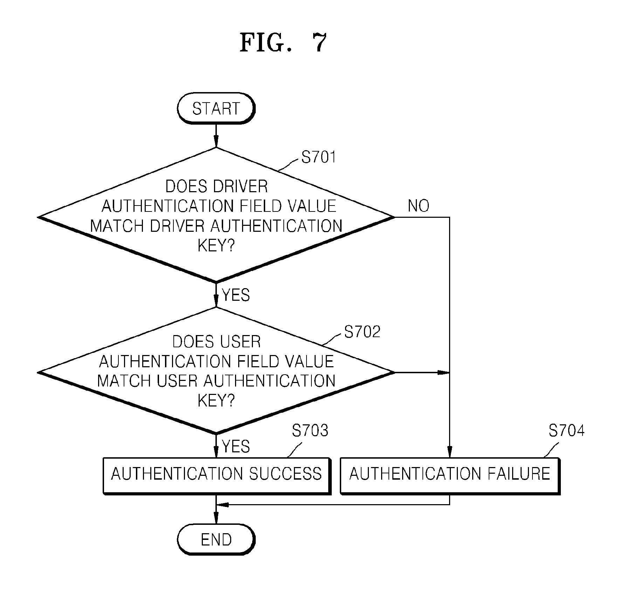

A process of performing authentication of print job data in the print job data authentication unit 333 will now be described with reference to FIGS. 5 and 7.

Referring to FIGS. 3 and 7, in operation S701, the print job data authentication unit 333 determines whether a driver authentication field value included in parsed print job data matches a driver authentication key located in the cache memory 163. For example, whether the authentication field value "SECURERELEASEPRINT" on the first line in the PJL header area 410 of FIG. 4 matches the driver authentication key located in the cache memory 163 is compared and determined with respect to one or more strings one by one.

As a result of the determination of operation S701, if the driver authentication field value does not match the driver authentication key, the authentication fails in operation S704.

As a result of the determination of operation S701, if the driver authentication field value matches the driver authentication key, the print job data authentication unit 333 determines in operation S702 whether a user authentication field value matches a user authentication key located in the cache memory 163. For example, the print job data authentication unit 333 compares (determines) with respect to the strings one by one whether a user authentication key matching "ID=ABCD, PW=EFGH" as the authentication field value on the second line in the PJL header area 410 of FIG. 4 exists. When the image forming apparatus 100 has a plurality of user accounts, there may be a plurality of user authentication keys located in the cache memory 163.

As a result of the determination of operation S702, if the user authentication field value does not match the user authentication key, the authentication fails in operation S704.

As a result of the determination of operation S702, if the user authentication field value matches the user authentication key, the authentication succeeds in operation S703.

Although FIG 7 illustrates the process of performing authentication of print job data, the present general inventive concept is not limited thereto. It is possible that modification can be made according to authentication methods. For example, the authentication may be performed with only operation S701, performed with only operation S702, performed by changing an order of operations S701 and S702, or performed by further adding authentication of a host computer or an application as another authentication method. Although FIG. 7 illustrates that operation S702 for a user authentication is performed after operation S701 for a driver authentication, it is possible that an order of operation S701 and S702 may be changes according to a design or user preference or a priority.

According to a print job data authentication result, the mode switch determiner 340 determines whether the deep sleep mode P2 ends. If the authentication succeeds, the mode switch determiner 340 ends the deep sleep mode P2. In this case, the image forming apparatus 100 enters into the normal mode P0 through the general sleep mode P1 or directly enters into the normal mode P0. The image forming apparatus 100, which has entered into the normal mode P0, performs a corresponding print job based on the print job data. If the authentication fails, the mode switch determiner 340 ignores the wakeup event and keeps the deep sleep mode P2. In this case, the mode switch determiner 340 may discard the print job data for which the authentication has failed. Thus, the received print job data may be removed from the cache memory 163.

FIG. 5 is a flowchart illustrating a method of processing print job data according to an embodiment of the present general inventive concept. The above description of FIGS. 1 to 4 and 7 may be referred to in the embodiment of FIG. 5, and the repetitive description will be omitted.

Referring to FIGS. 3 and 5, in operation S505, the image forming apparatus 100 detects a wakeup event at the external input port 120. That is, the image forming apparatus 100 receives data transmitted by an external device (not illustrated) through the external input port 120 and detects this data reception as the wakeup event. The image forming apparatus 100 sequentially polls the parallel port 123, the network interface port 122, and the USB port 121 included in the external input port 120. If the data reception is detected at the network interface port 122, the image forming apparatus 100 determines whether the data has been transmitted using the TCP, and as a result of the determination, if the data has not been transmitted using the TCP, the image forming apparatus 100 ignores the wakeup event and keeps the deep sleep mode P2. If the data has been transmitted using the TCP as a result of the determination, the image forming apparatus 100 determines whether the data is print job data.

If the detected wakeup event is reception of print job data, the image forming apparatus 100 parses the print job data in operation S507 while maintaining the deep sleep mode P2. That is, the image forming apparatus 100 analyzes a PJL command existing in a header area of the print job data.

In operation S510, the image forming apparatus 100 checks whether an authentication field value for performing authentication exists in the parsed print job data. The authentication field value may include at least one of driver authentication information described with the PJL command and user account information described with the PJL command. The image forming apparatus 100 may check whether the authentication field value exists to determine whether a predefined string exists in the analyzed PJL command.

If the authentication field value does not exist, the image forming apparatus 100 ignores the wakeup event and keeps the deep sleep mode P2 in operation S515.

Otherwise, if the authentication field value exists, the image forming apparatus 100 performs authentication by comparing the authentication field value with an authentication key located in the cache memory 163 in operation S520.

If the authentication succeeds based on the authentication field value, the image forming apparatus 100 ends the deep sleep mode P2 in operation S525. Thereafter, the image forming apparatus 100 enters into the normal mode P0 to perform a print job based on the print job data.

Otherwise, if the authentication fails based on the authentication field value, the image forming apparatus 100 keeps the deep sleep mode P2 in operation S515. In this case, the image forming apparatus 100 preferably discards the print job data.

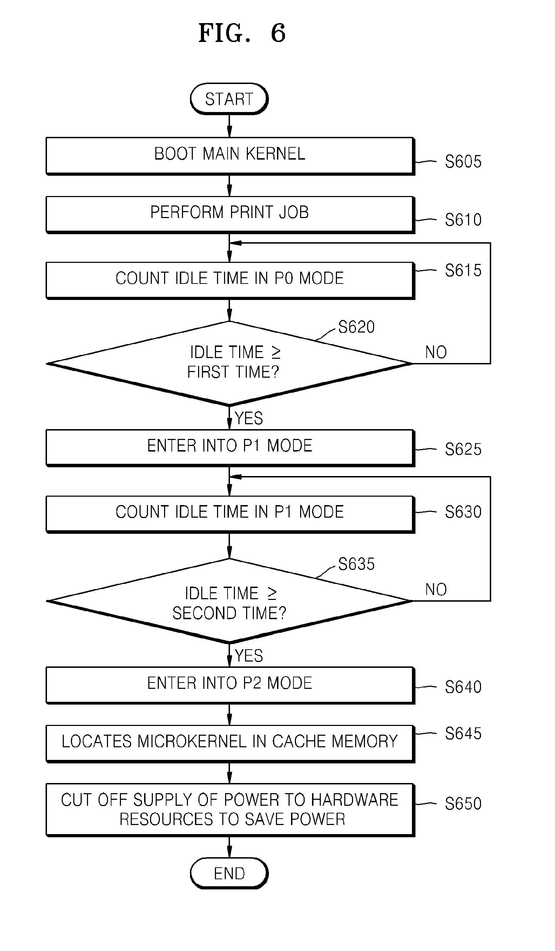

FIG. 6 is a flowchart illustrating a process of entering into the deep sleep mode P2 according to an embodiment of the present general inventive concept. The repetitive part of the above description will be omitted. Thus, FIGS. 1 to 5 and 7 may be referred to for the embodiment of FIG. 6.

Referring to FIGS. 3 and 6, in operation S605, the image forming apparatus 100 boots the main kernel 210 to operate in the normal mode P0. That is, the main kernel 210 is booted on the main memory 161 of the image forming apparatus 100. Operation S605 may be considered as a next operation of the S525 described in FIG. 5.

In operation S610, the image forming apparatus 100 performs a predetermined print job in the normal mode P0. The predetermined print job may be a print job based on print job data for which authentication has succeeded as described with reference to FIG. 5.

In operation S615, the image forming apparatus 100 counts an idle time after performing the print job.

In operation S620, the image forming apparatus 100 determines whether the idle time exceeds a preset first time. The first time is a time set by a user or a manufacturer and indicates a condition for entering into the general sleep mode P1 from the normal mode P0.

If the idle time exceeds the first time, the image forming apparatus 100 enters into the general sleep mode P1 in operation S625.

In operation S630, the image forming apparatus 100 operating in the general sleep mode P1 counts an idle time.

In operation S635, the image forming apparatus 100 determines whether the idle time exceeds a preset second time.

If the idle time exceeds the second time, the image forming apparatus 100 determines in operation S640 to enter into the deep sleep mode P2. The preset second time is preset by the user or the manufacturer and indicates a condition for entering into the deep sleep mode P2 from the general sleep mode P1.

In operation S645, the image forming apparatus 100 locates the microkernel 220 for controlling an operation of the image forming apparatus 100 in the deep sleep mode P2 in the cache memory 163. As described above, the microkernel 220 includes a PJL interpreter for parsing the print job data based on the PJL, and information regarding an authentication key.

In operation S650, the image forming apparatus 100 cuts off a supply of power to hardware resources that are to save power which include the main memory 161 and the function modules 150. Accordingly, the image forming apparatus 100 enters into the deep sleep mode P2.

According to an embodiment of the present general inventive concept, even though an image forming apparatus operating in a deep sleep mode receives print job data from an unauthorized user or an unauthorized printer driver, the image forming apparatus processes the print job data while maintaining the deep sleep mode, and thus, the deep sleep mode may be efficiently operated, and power consumption may be minimized.

The embodiments of the present general inventive concept can be written as computer programs and can be implemented in general-use digital computers that execute the programs using a computer-readable recording medium. In addition, a structure of data used in the embodiments of the present general inventive concept can be recorded in the computer-readable recording medium using various manners. Examples of the computer-readable recording medium include storage media such as magnetic storage media (e.g., ROM, floppy disks, hard disks, etc.) and optical recording media (e.g., CD-ROMs, or DVDs).

While the present general inventive concept has been particularly shown and described with reference to exemplary embodiments thereof, it will be understood by one of ordinary skill in the art that various changes in form and details may be made therein without departing from the scope of the present general inventive concept as defined by the following claims and their equivalents. The exemplary embodiments should be considered in descriptive sense only and not for purposes of limitation. Therefore, the scope of the present general inventive concept is defined not by the detailed description of the present general inventive concept but by the appended claims, and all differences within the scope will be construed as being included in the present general inventive concept.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of processing print job data received in a deep sleep mode by an image forming apparatus which performs a print job based on authentication, the method comprising:
detecting a wakeup event at at least one external input port included in the image forming apparatus;
parsing print job data while maintaining the deep sleep mode if the wakeup event is reception of the print job data;
checking whether an authentication field value for performing authentication exists in the parsed print job data; and
ignoring the wakeup event and keeping the deep sleep mode if the authentication field value does not exist based on the checking.

2. The method of claim 1, further comprising:
when the authentication field value exists in the checking operation, performing authentication by comparing the authentication field value with an authentication key located in a cache memory of the image forming apparatus; and
when the performed authentication succeeds based on the authentication field value, ending the deep sleep mode and performing a print job based on the print job data, and when the authentication fails based on the authentication field value, keeping the deep sleep mode and discarding the print job data.

3. The method of claim 2, further comprising:
when no job is performed for more than a predetermined time after the print job is performed, determining to re-enter into the deep sleep mode;
locating a microkernel for controlling an operation of the image forming apparatus in the deep sleep mode in the cache memory; and
cutting off a supply of power to hardware resources that are to save power, which include a main memory and a printing module of the image forming apparatus,
wherein the microkernel includes a print job language (PJL) interpreter for parsing the print job data based on a PJL and information regarding the authentication key.

4. The method of claim 1, wherein the authentication field value includes at least one of driver authentication information described with a PJL command and user account information described with the PJL command.

5. The method of claim 1, wherein:
the parsing comprises analyzing a PJL command existing in a header area of the print job data; and
the checking comprises determining whether a predefined string exists in the analyzed PJL command.

6. The method of claim 1, further comprising:
when the wakeup event is reception of data over a network, determining whether the data has been transmitted based on a transmission control protocol (TCP); and
when determined that the data has not been transmitted based on the TCP, ignoring the wakeup event and keeping the deep sleep mode.

7. The method of claim 1, wherein:
operational modes of the image forming apparatus include a normal mode, a general sleep mode, and the deep sleep mode;
in the general sleep mode, a supply of power to at least one of a printing module, a scanning module, a facsimile module and a copy module included in the image forming apparatus is cut off; and
in the deep sleep mode, a number of clocks of a cache memory in which a microkernel for controlling the operation of the image forming apparatus is located and a controller for processing the wakeup event is lowered, and a supply of power to hardware resources other than the cache memory, the controller, and the external input port is cut off.

8. An image forming apparatus having operational modes including a normal mode, a general sleep mode, and a deep sleep mode, the image forming apparatus comprising:
a cache memory in which a microkernel to control an operation of the image forming apparatus in the deep sleep mode is located; and
a controller to execute the microkernel located in the cache memory to process a wakeup event received while in the deep sleep mode,
wherein when print job data is received as the wakeup event, the controller checks whether an authentication field value for performing authentication exists in the print job data while maintaining the deep sleep mode, and when the authentication field value does not exist, the controller ignores the wakeup event and keeps the deep sleep mode.

9. The image forming apparatus of claim 8, wherein the controller parses the received print job data while maintaining the deep sleep mode to check whether the authentication field value exists in the parsed print job data.

10. The image forming apparatus of claim 8, further comprising:
at least one external input port to receive the wakeup event,
wherein power is supplied to the at least one external input port even while in the deep sleep mode.

11. The image forming apparatus of claim 8, wherein;
when the authentication field value exists based on the checking, the controller performs the authentication by comparing the authentication field value with an authentication key located in the cache memory; and
when the performed authentication succeeds, the controller ends the deep sleep mode to perform a print job based on the print job data, and when the authentication fails based on the authentication field value, the controller keeps the deep sleep mode and discards the print job data.

12. The image forming apparatus of claim 8, wherein the microkernel located in the cache memory includes a print job language (PJL) interpreter for parsing the received print job data based on a PJL and information regarding an authentication key.

13. The image forming apparatus of claim 8, wherein the authentication field value includes at least one of driver authentication information described with a PJL command and user account information described with the PJL command.

14. The image forming apparatus of claim 9, wherein the controller analyzes a PJL command existing in a header area of the received print job data to parse the received print job data and determines whether a predefined string exists in the analyzed PJL command to check whether the authentication field value exists.

15. The image forming apparatus of claim 8, wherein the cache memory and the controller are mounted on a main board of the image forming apparatus in the form of a System on Chip (SoC), and in the deep sleep mode, a supply of power to the main board is cut off except for a region in which the SoC exists.
